Europäisches Patentamt

European Patent Office

Office européen des brevets

(19)

(11) Veröffentlichungsnummer: **0 114 257**
**B1**

(12) **EUROPÄISCHE PATENTSCHRIFT**

(45) Veröffentlichungstag der Patentschrift:
**16.03.88**

(51) Int. Cl.⁴: **B 60 J 1/10,** B 61 D 25/00

(21) Anmeldenummer: **83111948.2**

(22) Anmeldetag: **29.11.83**

(54) **Fahrzeugfenster.**

(30) Priorität: **20.01.83 DE 3301757**

(43) Veröffentlichungstag der Anmeldung:
**01.08.84 Patentblatt 84/31**

(45) Bekanntmachung des Hinweises auf die Patenterteilung:
**16.03.88 Patentblatt 88/11**

(84) Benannte Vertragsstaaten:
**AT CH DE FR GB IT LI**

(56) Entgegenhaltungen:
**EP-A-0 009 246**
**DE-A-3 117 103**
**DE-C-673 951**
**FR-A-2 453 743**
**US-A-4 219 230**

(73) Patentinhaber: **Messerschmitt- Bölkow- Blohm**
**Gesellschaft mit beschränkter Haftung, Robert-**
**Koch- Strasse, D-8012 Ottobrunn (DE)**

(72) Erfinder: **Stark, Reimund, Dipl.- Ing., Flurstrasse**
**10, D-8891 Griesbeckerzell (DE)**

## Beschreibung

Die Erfindung bezieht sich auf ein Isolierglasfenster, und insbesondere ein Seitenfenster für Kochgeschwindigkeits-Reisezugwagen nach dem Oberbegriff des Patentanspruchs 1.

Bei den etwa aus der DE-A-31 17 103 bekannten, isolierverglasten Fahrzeugfenstern der beanspruchten Art stellt sich das Problem, daß die Isolierverglasung selbst, deren einzelne Teilscheiben durch eine dichtend und feuchtigkeitssperrend wirkende, aber lastempfindliche Verklebung miteinander verbunden sind, beim Transport und beim Einbau sehr vorsichtig gehandhabt und an jeder ihrer Einzelscheiben nachträglich gesondert mit dem Fensterrahmenprofil hochfest verklebt werden muß, um den hohen Betriebsbelastungen, wie sie etwa bei schienengebundenen Fahrzeugen aufgrund der Sogwirkung im Gegenverkehr und/oder gar bei Einbeziehung der Isolierverglasung als schubübertragendes Versteifungselement der Fahrzeugstruktur auftreten, standzuhalten, wobei die aus aerodynamischen Gründen geforderte Außenhaut-bündigkeit des Fensters zusätzlich eine komplizierte gekröpfte oder stufenförmige Gestaltung der Isolierglasscheibe und des zugeordneten Rahmenprofils mit hoher Einbaugenauigkeit erforderlich macht.

Der Erfindung liegt die Aufgabe zugrunde, bei einem Isolierglasfenster ohne nachträgliche Verklebung eine hochfeste Verkoppelung der einzelnen Teilscheiben miteinander und mit dem Rahmenprofil sicherzustellen.

Diese Aufgabe wird erfindungsgemäß durch das im Anspruch 1 gekennzeichnete Fenster in der Weise gelöst, daß das Rahmenprofil mit seinem in den Scheibenzwischenraum eingreifenden Steg bereits bei der Herstellung der Isolierverglasung in diese als integraler, tragender Bestandteil einbezogen und -gemäß Anspruch 2 vorzugsweise über unterschiedliche Klebstoffschichten- einerseits feuchtigkeitssperrend und andererseits hochfest mit jeder Teilscheibe der Isolierverglasung verbunden wird, so daß mit dem erfindungsgemäßen, konstruktiv und fertigungstechnisch äußerst einfach ausgebildeten Isolierglasfenster die eingangs erwähnten transport-,einbau-und betriebslastbedingten Probleme ausgeräumt werden und, da auch die Außenscheibe wegen ihrer großflächigen, hochfesten Verklebung ihrer dem Scheibenzwischenraum zugekehrten Innenfläche mit dem Profilsteg keiner weiteren Verankerung bedarf, der insbesondere an moderne Verkehrsfahrzeuge gestellten Forderung nach einer Außenhausbündigkeit ohne zusätzliche Hilfsmaßnahmen voll entsprochen werden kann.

Im einfachsten Fall kann das Rahmenprofil bei einer Zweischeibenisolierverglasung zwar allein aus dem in den Scheibenzwischenraum eingeklebten, mit seinem nach außen vorstehenden Endbereich an der Fahrzeugstruktur befestigten Längssteg bestehen, aus Versteifungsgründen und bei Mehrfach-Isolierglasscheiben enthält das Rahmenprofil gemäß Anspruch 3 jedoch vorzugsweise eine Bodenleiste, an der der oder die parallel nebeneinanderliegenden Längsstege einstückig angeformt sind, wobei in diesem Fall die feuchtigkeitssperrende Verklebung gemäß Anspruch 4 zweckmäßigerweise zwischen der Bodenleiste und den stirnseitigen Scheibenrändern vorgesehen ist, so daß die Stegseiten für eine großflächige, hochfeste Montageklebung zur Verfügung stehen.

Um bei Einbeziehung des Fensters als Schubübertragungselement der Fahrzeugstruktur unzulässige Spannungsspitzen zu vermeiden, vor allem wenn die Fensterecken mit kleinem Krümmungsradius gerundet sind, ist das Rahmenprofil bzw. der Längssteg gemäß Anspruch 5 an den Fensterecken vorzugsweise unterbrochen.

Eine konstruktiv sehr einfache Verkoppelung des Rahmenprofils mit der Fahrzeugstruktur, die allerdings nur bei Anwendungsfällen bevorzugt wird, in denen eine maßgenaue Gestaltung der Fahrzeugzelle im Bereich des Fensterausschnitts sowie ein Zusammenbau der Einzelscheiben zu einer Isolierverglasung am Montageort der Fahrzeugstruktur keine Schwierigkeiten bereiten, wird gemäß Anspruch 12 dadurch erreicht, daß das Rahmenprofil einschließlich der Längsstege einstückig an der Fahrzeugstruktur angeformt ist, im allgemeinen wird es sich jedoch empfehlen, die Isolierverglasung und das mit dieser integral verbundene Rahmenprofil als gesonderte Baueinheit herzustellen und dann als Ganzes auf die in den Ansprüchen 6 bis 9 gekennzeichnete Weise lösbar an der Fahrzeugstruktur zu befestigen, also zu verkleben und/oder zu verschrauben. Zum Ausgleich von Fertigungstoleranzen der Fahrzeugstruktur sind dabei gemäß Anspruch 6 zweckmäßigerweise in Richtung der Flächenerstreckung der Isolierverglasung wirksame Justier -und Abdrückschrauben vorgesehen, die zugleich eine Lagefixierung beim Aushärten der Klebstoffschicht zwischen Rahmenprofil und Fahrzeugstruktur bewirken und vor allem auch ein leichtes Auswechseln eines beschädigten Fensters durch Abdrücken des Rahmenprofils und dadurch Aufreißen seiner fahrzeugstrukturseitigen Klebeschicht gewährleisten, wobei in diesem Fall das im allgemeinen als Aluminium-Strangpreßteil gefertigte Rahmenprofil zur Vergleichmäßigung der Flächenpressung beim Abdrückvorgang gemäß Anspruch 7 vorzugsweise durch eine Stahleinlage im Bereich der Angriffspunkte der Justier-und Abdrückschrauben verstärkt ist. Als weitere sehr einfache Möglichkeit eines Ausgleichs von Fertigungstoleranzen sowie eines problemlosen Fensteraustauschs wird gemäß Anspruch 9 die Befestigung des Rahmenprofils an der Fahrzeugstruktur über keilförmige Klemmleisten bevorzugt, die für den Fall einer zusätzlichen Verklebung ebenfalls zur Lagefixierung während des Aushärtprozesses und zum Abdrücken des Rahmenprofils bei der Demontage eines beschädigten Fensters benutzt werden können.

Um an der Verbindungsstelle zwischen Rahmenprofil und Fahrzeugstruktur eine hohe Schubfestigkeit zu erzielen, sind diese gemäß Anspruch 10 zweckmäßigerweise miteinander verzahnt, und in die Ausgleichsfuge zwischen Rahmenprofil und Fahrzeugaußenhaut wird gemäß Anspruch 11 vorzugsweise eine Abdeckleiste als Korrossionsschutz und/oder bei einer Verfugung mit einem UV-empfindlichen Dicht-oder Klebstoff als Lichtschutz eingesetzt.

Vier Ausführungsbeispiele der Erfindung werden anhand der Zeichnungen näher erläutert. Es zeigt in schematischer Schnittdarstellung:

Fig. 1 ein mit der Fahrzeugstruktur verschraubtes Isolierglasfenster;

Fig. 2 ein Dreischeiben-Isolierglasfenster mit einem an der Fahrzeugstruktur sowohl verschraubten als auch verklebten Rahmenprofil;

Fig. 3 ein Isolierglasfenster mit einstückig an die Fahrzeugstruktur angeformtem Rahmenprofil;

Fig. 4 ein nach außen demontierbares Isolierglasfenster mit einem über Ausgleichskeile an der Fahrzeugstruktur justierten Rahmenprofil.

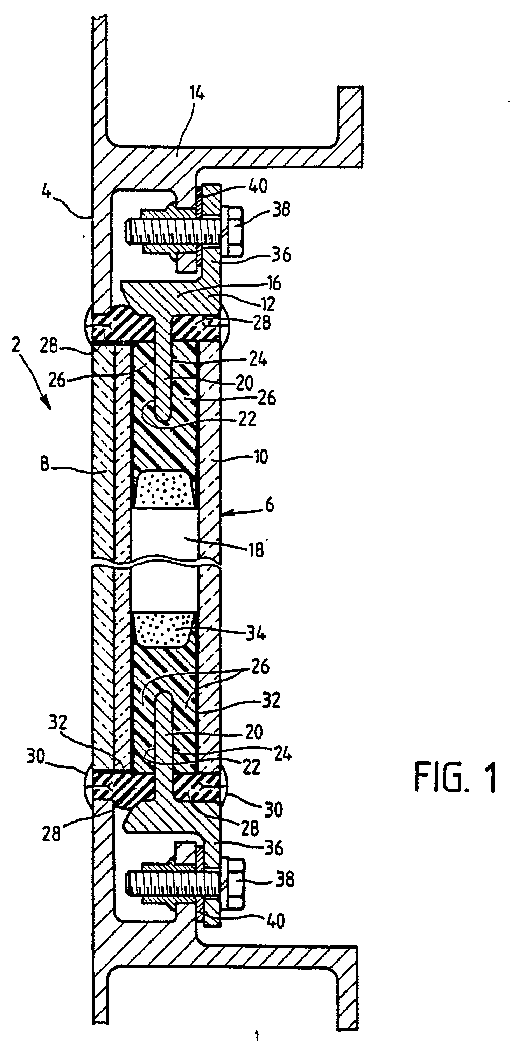

Das Fahrzeug-Seitenfenster 2 gemäß Fig. 1 enthält eine mit der Fahrzeugaußenhaut 4 bündige Zweischeiben-Isolierverglasung 6 mit einer Außenscheibe 8 in Form einer Verbundglasscheibe, einer Innenscheibe 10 und einem als Aluminium-Strangpreßprofil ausgebildeten Rahmenprofil 12, über das die beiden Teilscheiben 6, 8 hochfest miteinander und mit der Fahrzeugstruktur 14 verkoppelt werden. Das die Isolierverglasung 6 auf allen vier Seiten mit Ausnahme der Fensterecken einfassende Rahmenprofil 12 ist mit einem an einer Bodenleiste 16 einstückig angeformten, in den Scheibenzwischenraum 18 eingreifenden Längssteg 20 versehen, mit dessen Stegseiten 22 bzw. 24 die Außenscheibe 8 auf ihrer Innenseite und die Innenscheibe 10 auf ihrer Außenseite bei der Herstellung der Isolierverglasung 6 durch eine Klebstoffschicht 26 jeweils hochfest verbunden werden, wobei die Steghöhe und somit die zwischen jeder Teilscheibe 8, 10 und dem Steg 20 wirksame Klebfläche so groß bemessen werden, daß die über die hochfeste Verklebung 26 und den Steg 20 bewirkte Verkoppelung der Scheiben 8, 10 untereinander und mit dem Rahmenprofil 12 allen Transport-, Einbau-und Betriebsbelastungen standhält. Die zur Abdichtung des Scheibenzwischenraumes 18 erforderliche, übliche feuchtigkeitssperrende Dicht-oder Klebstoffmasse 28 hingegen ist nach außen an die hochfeste Verklebung 26 angrenzend in dem Spalt zwischen dem stirnseitigen Scheibenrand und der Bodenleiste 16 angeordnet, also von den Verkoppelungskräften entlastet, und übernimmt bei diesem Ausführungsbeispiel gleichzeitig die Fugenabdichtung zwischen Außenscheibe 8 und Fahrzeugaußenhaut 4. An den Fensterecken, wo das Rahmenprofil 12 unterbrochen ist, werden natürlich auch die Trennfugen zwischen den Profilenden mit der Dicht-oder Klebstoffmasse 28 ausgefüllt.

Zum Schutz dieser im allgemeinen U-V-empfindlichen Dichtmasse 28 dienen in diese eingedrückte Abdeckleisten 30 sowie eine im Bereich der Scheibenrandzonen aufgebrachte Emailbeschichtung 32. Das bei Isolierverglasungen übliche, umlaufende, mit Trocknungsmittel gefüllte Hohlprofil 34 ist an die hochfeste Verklebung 26 nach innen angrenzend im Scheibenzwischenraum 18 angeordnet.

Die Befestigung der aus der Isolierverglasung 6 und dem Rahmenprofil 12 bestehenden Baueinheit an der Fahrzeugstruktur 14 erfolgt über einen versetzt zum Längssteg 20 einstückig an der Bodenleiste 16 angeformten Profilschenkel 36, der an der Fahrzeugstruktur 14 durch Befestigungsschrauben 38 unter Zwischenlage von körperschallisolierenden Ausgleichsscheiben 40 gesichert ist, so daß die Isolierverglasung 6 mit dem Rahmenprofil 12 als Ganzes nach innen demontierbar ist.

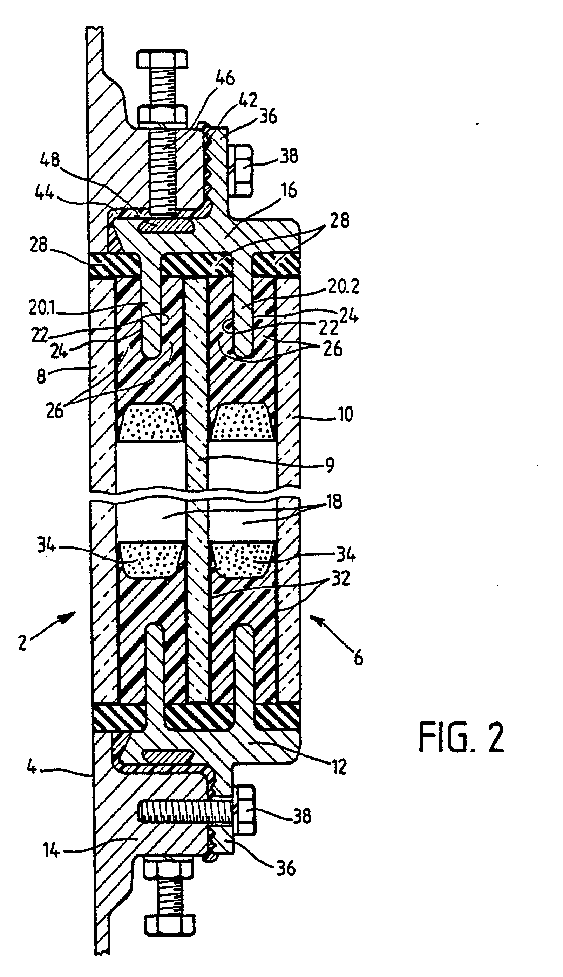

Das Ausführungsbeispiel gemäß Fig. 2, bei dem die entsprechenden Bauelemente durch das gleiche Bezugszeichen wie beim ersten Ausführungsbeispiel gekennzeichnet sind, unterscheidet sich von diesem hauptsächlich durch eine andersartige Befestigung zwischen Rahmenprofil 12 und Fahrzeugstruktur 14 sowie dadurch, daß die Isolierverglasung 6 aus drei Teilscheiben 8, 9 und 10 besteht. Zu diesem Zweck ist das Rahmenprofil 12 mit zwei einstückig an der Bodenleiste 16 angeformten, parallel zueinander verlaufenden Stegen 20.1 und 20.2 versehen, die jeweils über die hochfeste Montageklebung 26 in den Scheibenzwischenraum 18 zwischen die in diesem Fall als Einfachscheibe ausgebildete Außenscheibe 8 und die Mittelscheibe 9 bzw. diese und die Innenscheibe 10 der Isolierverglasung 6 eingeklebt sind. Aus Gründen einer hochgradig schubfesten Anbindung der Isolierverglasung 6 einschließlich des Rahmenprofils 12 an der Fahrzeugstruktur 14 ist ferner der Profilschenkel 36 im Bereich der Verschraubung 38 mit Verzahnungen 42 versehen, die sich beim Festziehen der Schrauben 38 in die Gegenfläche der Fahrzeugstruktur eindrücken, und zusätzlich ist das Rahmenprofil 12 durch einen hochfesten Montagekleber 44 an der Fahrzeugstruktur 14 befestigt. Zur Justierung und Lagefixierung des Fensters 2 bezüglich der Fahrzeugstruktur 14 während des Aushärtens des Klebers 44 sind zwischen dieser und der Bodenleiste 16 in Richtung der Flächenerstreckung der Scheiben wirksame Justierschrauben 46 angeordnet, die außerdem dazu dienen, beim Auswechseln eines beschädigten Fensters 2 das Rahmenprofil 12 unter Aufsprengen der Klebeschicht 44 von der Fahrzeugstruktur 14 abzudrücken, wobei in das Rahmenprofil 12 aus Gründen einer vergleichmäßigten Flächenpressung eine Stahlleiste 48 im Bereich der Angriffspunkte der Justier-und Abdrückschrauben 46 eingelegt ist.

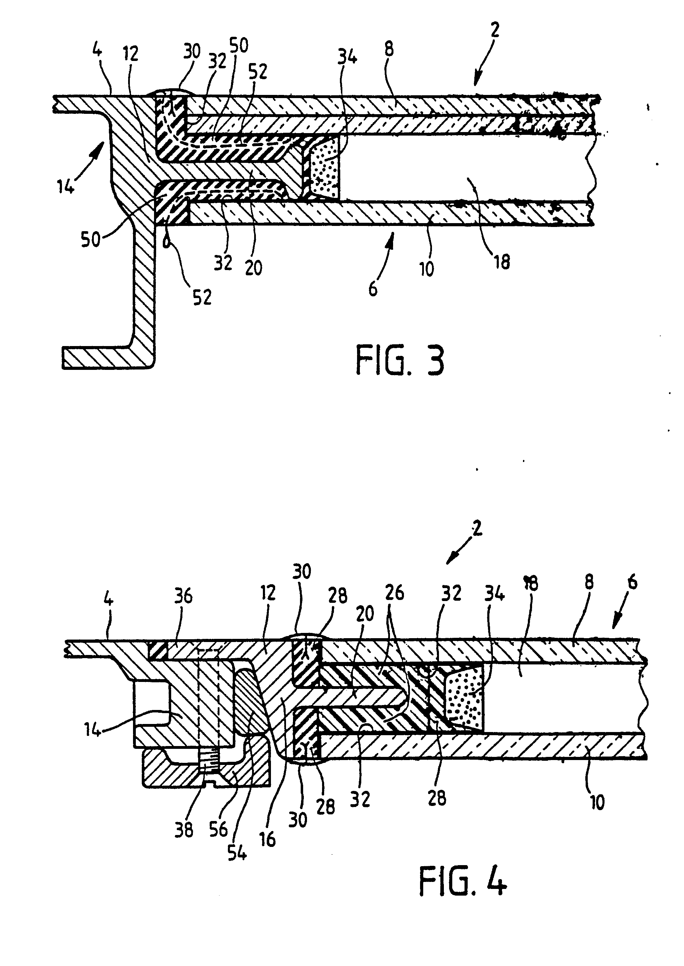

Fig. 3 zeigt die Möglichkeit, das Rahmenprofil 12 mit seinem in den Scheibenzwischenraum 18 eingreifenden Steg 20 einstückig mit der Fahrzeugstruktur 14 auszubilden und zur Verklebung der einzelnen Teilscheiben 8 und 10 mit dem Rahmenprofil 12 einen einzigen Kleber 50 zu verwenden, der sowohl die erforderliche Feuchtigkeitssperre als auch -wegen der Größe der zwischen dem Steg 20 und jeder Einzelscheibe 8 bzw. 10 vorhandenen Klebeflächen- eine ausreichend belastungssichere, schubfeste Verkoppelung garantiert. Zum Auswechseln der Scheiben 8, 10 sind in die Klebstoffschichter 50 gestrichelt dargestellte Demontagedrähte 52 eingebettet.

Bei dem Ausführungsbeispiel gemäß Fig. 4 ist das Rahmenprofil 12 einschließlich der Isolierverglasung 6 nach außen demontierbar an der Fahrzeugstruktur 14 befestigt und die Justierung des Fensters 2 im Fensterausschnitt in Richtung der Flächenerstreckung der Scheiben 8, 10 erfolgt durch keilförmige , zwischen der Fahrzeugstruktur 14 und der in diesem Fall konisch ausgebildeten Bodenleiste 16 des Rahmenprofils 12 angeordnete Ausgleichsleisten 54, die beim Festziehen der Schrauben 38 durch zwischen diesen und den Ausgleichskeilen 54 wirksame Stellpratzen 56 festgeklemmt werden. Bei diesem Ausführungsbeispiel ist ferner die feuchtigkeitssperrende Dicht-oder Klebschicht 28 nach innen an die lastübertragende Verklebung 26 angrenzend zwischen dieser und dem Hohlprofil vorgesehen. Im übrigen hat das Isolierglasfenster 2 gemäß den Fign. 3 bzw. 4 die gleiche Ausbildung wie bei den beiden ersten Ausführungsbeispielen.

**Patentansprüche**

1. Fahrzeugfenster (2), insbesondere Seitenfenster für Hochgeschwindigkeits-Reisezugwagen, mit einer außenhautbündigen Zwei-oder Mehrscheiben-Isolierverglasung, deren Teilscheiben (8, 9, 10) im Abstand zueinander über Klebstoffschichten (26) gegenseitig feuchtigkeitssperrend (28) und jeweils einzeln mit einem an der Fahrzeugstruktur (14) befestigten Rahmenprofil (12) feststehend verbunden sind, dadurch gekennzeichnet, daß das Rahmenprofil (12) mindestens einen in den Scheibenzwischenraum (18) eingreifenden, die Scheiben (8, 9, 10) miteinander und mit der Fahrzeugstruktur (14) verkoppelnden Längssteg (20) mit an den Stegseiten (22, 24) angeordneten Klebeflächen für jede einzelne Teilscheibe der Isolierverglasung (6) aufweist.

2. Fahrzeugfenster nach Anspruch 1, dadurch gekennzeichnet, daß jede Teilscheibe (8, 9, 10) auf ihrer Innen-oder Außenfläche mit der zugeordneten Stegseite (22, 24) durch eine hochfeste Montageklebung (26) verbunden und daran angrenzend eine feuchtigkeitssperrende Verklebung (28) vorgesehen ist.

3. Fahrzeugfenster nach Anspruch 1 oder 2, dadurch gekennzeichnet, daß das Rahmenprofil (12) eine Bodenleiste (16) mit einem oder mehreren, entsprechend dem Scheibenabstand nebeneinanderliegenden, einstückig angeformten Längsstegen (20) enthält.

4. Fahrzeugfenster nach den Ansprüchen 2 und 3, dadurch gekennzeichnet , daß die feuchtigkeitssperrende Verklebung (28) zwischen der Bodenleiste (16) und den stirnseitigen Scheibenrändern vorgesehen ist.

5. Fahrzeugfenster nach einem der vorhergehenden Ansprüche, dadurch gekennzeichnet , daß das Rahmenprofil (12) an den Fensterecken unterbrochen ist.

6. Fahrzeugfenster nach einem der vorhergehenden Ansprüche, dadurch gekennzeichnet, daß das Rahmenprofil (12) mit der Fahrzeugstruktur (14) verklebt und zur Demontage in die Verklebung eingebettete Reißdrähte (52) oder in Richtung der Flächenerstreckung der Isolierverglasung (6) zwischen Fahrzeugstruktur und Rahmenprofil wirksame Justier-und Abdrückschrauben (46) vorgesehen sind.

7. Fahrzeugfenster nach Anspruch 6, dadurch gekennzeichnet, daß das Rahmenprofil (12) eine längs der Angriffpunkte der Justier-und Abdrückschrauben (46) verlaufende Stahleinlage (48) enthält.

8. Fahrzeugfenster nach einem der vorhergehenden Ansprüche, dadurch gekennzeichnet, daß das Rahmenprofil (12) an der Fahrzeugstruktur (14) nach innen oder außen demontierbar verschraubt (Befestigungsschrauben 38) ist.

9. Fahrzeugfenster nach Anspruch 8, dadurch gekennzeichnet, daß das Rahmenprofil (12) an der Fahrzeugstruktur (14) durch verschraubte Ausgleichskeile (54) gesichert ist.

10. Fahrzeugfenster nach einem der Ansprüche 6-9, gekennzeichnet durch zwischen dem Rahmenprofil (12) und der Fahrzeugstruktur (14) schubübertragend wirkende Verzahnungen (42).

11. Fahrzeugfenster nach einem der Ansprüche 6-10, gekennzeichnet durch eine in die Klebe-bzw. Ausgleichsfuge zwischen Fahrzeugaußenhaut (4) und Rahmenprofil (12) eingesetzte Abdeckleiste (30).

12. Fahrzeugfenster nach einem der Ansprüche 1-5, dadurch gekennzeichnet, daß das Rahmenprofil (12) einstückig an der Fahrzeugstruktur (14) ausgebildet ist.

**Claims**

1. A vehicle window (2), more especially a side window for high-speed passenger-train carriages, with a two-pane or multi-pane insulating glazing which is flush with the outer skin and the partial panes (8, 9, 10) of which are connected at a spacing from one another by way of adhesive layers (26) in a mutually moisture-blocking manner (28) and in each case individually fixed to a frame profile (12) fastened to the vehicle structure (14), characterised in that the frame profile (12) has at least one longitudinal web (20) which engages into the pane interspace (18) and which couples the panes (8, 9, 10) with one another and with the vehicle structure (14) and which has adhesion surfaces, arranged at the web sides (22, 24), for each individual partial pane of the insulating glazing (6).

2. A vehicle window according to claim 1, characterised in that each partial pane (8, 9, 10) is connected on its inner or outer surface to the associated web side (22, 24) by a high-strength assembly adhesive (26) and contiguous thereto a moisture-blocking bonding (28) is provided.

3. A vehicle window according to claim 1 or 2, characterised in that the frame profile (12) contains a base strip (16) with one or more longitudinal webs (20) which lie side-by-side in accordance with the pane spacing and which is integrally formed in one piece.

4. A vehicle window according to claims 2 and 3, characterised in that the moisture-blocking bonding (28) is provided between the base strip (16) and the frontal pane edges.

5. A vehicle window according to one of the preceding claims, characterised in that the frame profile (12) is interrupted at the window corners.

6. A vehicle window according to one of the preceding claims, characterised in that the frame profile (12) is bonded with the vehicle structure (4) and ripping wires (52), embedded into the bonding, or adjusting and loosening screws (46), effective in the direction of the surface extent of the insulating glazing (6) between vehicle structure and frame profile, are provided for the demounting.

7. A vehicle window according to claim 6, characterised in that the frame profile (12) contains a steel insert (48) which extends along the points of application of the adjusting and loosening screws (46).

8. A vehicle window according to one of the preceding claims, characterised in that the frame profile (12) is screwed (fastening screws 38) to the vehicle structure (14) so as to be demountable inwardly or outwardly.

9. A vehicle window according to claim 8, characterised in that the frame profile (12) is secured to the vehicle structure (14) by screwed compensating wedges (54).

10. A vehicle window according to one of claims 6 to 9, characterised by serrations (42) which act in a shear-transmitting manner between the frame profile (12) and the vehicle structure (14).

11. A vehicle window according to one of claims 6 to 10, characterised by a cover-strip (30) which is inserted into the adhesive or respectively compensating joint between vehicle outer skin (4) and frame profile (12).

12. A vehicle window according to one of claims 1 to 5, characterised in that the frame profile (12) is fashioned in one piece on the vehicle structure (14).

## Revendications

1. Fenêtre de véhicule (2), notamment latérale pour voitures de trains à grande vitesse, avec un vitrage isolant de deux ou plus de deux vitres aligné à fleur avec la carrosserie dont les vitres élémentaires (8, 9, 10) sont assemblées à demeure entre elles par des couches de colle (26) à une certaine distance les unes des autres avec barrage (28) contre l'humidité et chaque fois individuellement à un profilé de châssis (12) fixé à la structure (14) du véhicule, caractérisée par le fait que le profilé de châssis (12) présente au moins une nervure longitudinale (20) avec des surfaces de collage disposées sur ses côtés (22, 24) pour chaque vitre élémentaire individuelle du vitrage isolant (6), nervure qui pénètre dans l'intervalle (18) entre les vitres et couple ces vitres (8, 9, 10) entre elles et avec la structure (14) du véhicule.

2. Fenêtre de véhicule selon la revendication 1 caractérisée par le fait que chaque vitre élémentaire (8, 9, 10) est assemblée, sur sa face intérieure ou extérieure, aux côtés (22, 24) correspondants de la nervure par un collage de montage (26) à haute résistance et qu'il existe un autre collage (28) contigu à ce dernier et formant barrage contre l'humidité.

3. Fenêtre de véhicule selon la revendication 1 ou 2 caractérisée par le fait que le profilé de châssis (12) comporte une âme (16) avec une ou plusieurs nervures longitudinales (20) espacées entre elles comme les vitres et venues de moulage d'une seule pièce avec ladite âme.

4. Fenêtre de véhicule selon les revendications 2 et 3 caractérisée par le fait que le collage (28) formant barrage contre l'humidité est placé entre l'âme (16) du profilé et les bords frontaux des vitres.

5. Fenêtre de véhicule selon l'une des revendications précédentes caractérisée par le fait que le profilé de châssis (12) est interrompu aux angles de la fenêtre.

6. Fenêtre de véhicule selon l'une des revendications précédentes caractérisée par le fait que le profilé de châssis (12) est collé à la structure (14) du véhicule et que, pour le démontage, des fils d'arrachage (52) sont noyés dans le collage ou des vis d'ajustage et d'écartement (46) sont prévues pour agir en direction de l'étendue superficielle du vitrage isolant (6) entre la structure du véhicule et le profilé de châssis.

7. Fenêtre de véhicule selon la revendication 6 caractérisée par le fait que le profilé de châssis (12) renferme une insertion d'acier (48) s'étendant le long des points d'attaque des vis d'ajustage et d'écartement (46).

8. Fenêtre de véhicule selon l'une des revendications précédentes <u>caractérisée</u> par le fait que le profilé de châssis (12) est fixé de façon démontable vers l'intérieur ou vers l'extérieur (par des vis 38).

9. Fenêtre de véhicule selon la revendication 8 <u>caractérisée</u> par le fait que le profilé de châssis (12) est bloqué sur la structure (14) du véhicule par des coins de compensation (54) serrés par des vis.

10. Fenêtre de véhicule selon l'une des revendications 6 à 9 <u>caractérisée</u> par le fait qu'entre le profilé de châssis (12) et la structure (14) du véhicule des dentures agissent en transmission de poussée.

11. Fenêtre de véhicule selon l'une des revendications 6 à 10 <u>caractérisée</u> par le fait qu'un liston de recouvrement (30) est inséré dans la fente de collage, ou de compensation, entre la carrosserie (4) du véhicule et le profilé de châssis (12).

12. Fenêtre de véhicule selon l'une des revendications 1 à 5 <u>caractérisée</u> par le fait que le profilé de châssis (12) est établi d'une seule pièce avec la structure (14) du véhicule.

FIG. 1

FIG. 2

FIG. 3

FIG. 4